# EUROPÄISCHE PATENTSCHRIFT

(11) **EP 4 231 195 B1**
(45) Veröffentlichungstag und Bekanntmachung des Hinweises auf die Patenterteilung: **10.07.2024**
(21) Anmeldenummer: 22157758.8
(22) Anmeldetag: 21.02.2022
(51) Int. Cl.: G06K 7/14

(54) **AUFFINDEN VON CODEBILDBEREICHEN IN EINEM BILD EINES CODETRAGENDEN OBJEKTS**
LOCATION OF CODE IMAGE AREAS IN AN IMAGE OF A CODE-BEARING OBJECT
DÉTECTION DES ZONES D'IMAGE DE CODE DANS UNE IMAGE D'UN OBJET PORTANT UN CODE

(43) Veröffentlichungstag der Anmeldung: 23.08.2023
(73) Patentinhaber: SICK AG, 79183 Waldkirch (DE)
(72) Erfinder: Schüler, Pascal, 79331 Teningen (DE); Roser, Christofer, 78098 Triberg (DE); Falk, Thorsten, 79292 Pfaffenweiler (DE); Burghardt, Sascha, 79183 Waldkirch (DE); Müller, Romain, 79252 Stegen (DE)

(56) Entgegenhaltungen:
- EP-B1- 3 428 834
- DE-A1- 10 137 093
- US-A1- 2020 380 229

## Beschreibung

Die Erfindung betrifft ein computerimplementiertes Verfahren zum Auffinden von Codebildbereichen in einem Ausgangsbild eines codetragenden Objekts nach dem Oberbegriff von Anspruch 1 sowie einen optoelektronischen Codeleser nach dem Oberbegriff von Anspruch 15, der ein entsprechendes Verfahren verwendet.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die codetragenden Objekte an dem Codeleser vorbeigefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Als Vorbereitung für das Lesen von Codes wird in einem aufgenommenen Ausgangsbild eines codetragenden Objekts nach Codebildbereichen gesucht, also denjenigen Bereichen im Bild, die potentiell einen Code enthalten können. Dieser Schritt wird als Segmentierung oder Vorsegmentierung bezeichnet. Dem menschlichen Betrachter fällt die Erkennung von Codebildbereichen sehr leicht. Algorithmisch betrachtet ist dies jedoch eine ausgesprochen anspruchsvolle Aufgabe. Denn oftmals weisen Muster oder Strukturen im Hintergrund ähnliche Eigenschaften auf wie die Codebildbereiche selbst. Beispielsweise besitzen 2D-Codes mit sehr kleinen Modulen in vielerlei Hinsicht sehr ähnliche Eigenschaften wie Textbereiche, Logos, Paketbänder und dergleichen. Deshalb ist herkömmlich die Fehlerrate der Segmentierung noch zu hoch. Dabei sind Fehler zu unterscheiden, durch die Bereiche mit Codes übersehen werden (falsch negativ, false negative) und durch die ein Bereich ohne Code als Codebildbereich aufgefunden wird (falsch positiv, false positive). Der erstgenannte Fehler verhindert womöglich, sofern das Objekt nicht mehrere redundante Codes trägt, die durch die Codeinformation gesteuerte automatisierte Verarbeitung, während der letztgenannte Fehler die begrenzten Rechenressourcen und verfügbaren Zeitfenster beansprucht, so dass womöglich ein Code in einem anderen Codebildbereich nicht mehr rechtzeitig gelesen wird.

In den meisten heutigen Codeleseanwendungen erfolgt die Segmentierung durch traditionelle Bildverarbeitungsalgorithmen und von Hand erstellte Klassifikatoren. Damit werden oft selbst sehr kleine Strukturen noch gut erkannt und somit auch Codebildbereiche mit kleinen Codes gefunden, beispielsweise 2D-Codes mit kleiner Modul- und Symbolgröße oder Barcodes mit geringer Codehöhe beziehungsweise Balkenlänge. Der herkömmliche Ansatz bleibt in seiner Bewertung sehr lokal. In schwierigen Lesesituationen etwa mit vielen Hintergrundstrukturen werden dadurch aber viele falsch-positive Codebildbereiche aufgefunden, die unter den typischen Echtzeitbedingungen der Anwendung nicht alle verarbeitet werden können und dadurch die Leserate herabsetzen.

Ein anderer Ansatz für die Segmentierung basiert auf künstlichen neuronalen Netzen, insbesondere tiefen Faltungsnetzen (Deep Neural Network, Convolutional Neural Network CNN). Letztlich wendet ein solches neuronales Netz eine Vielzahl von mit Beispieldaten trainierten Filterkernen auf das Ausgangsbild an. Diese inkrementelle Anwendung zahlreicher Filter macht ein neuronales Netz sehr rechenintensiv. Darum muss in den ersten Schichten die Bildauflösung stark reduziert werden. Dadurch besteht jedoch die Gefahr, feinere Strukturen im Ausgangsbild zu verlieren. Die Folge ist, dass kleinere Codebildbereiche übersehen werden, es also eine relativ große Rate falsch negativer Fehler gibt. Nicht gefundene Codebildbereiche schlagen direkt auf die Leserate durch. Umgekehrt sind die aufgefundenen Codebildbereiche recht verlässlich, die Rate falsch positiver Fehler ist im Vergleich mit einem klassischen Segmentierungsansatz geringer.

In der Arbeit Zhao, Qijie, et al, "Deep Dual Pyramid Network for Barcode Segmentation using Barcode-30k Database", arXiv preprint arXiv:1807.11886 (2018) wird ein großer Datensatz synthetisiert und damit eine Codesegmentierung durch CNNs durchgeführt. Die genaue Netzwerkarchitektur und Hardwareimplementierung werden nicht vorgestellt.

Xiao, Yunzhe, and Zhong Ming, "1D Barcode Detection via Integrated Deep-Learning and Geometrie Approach", Applied Sciences 9.16 (2019): 3268 reklamieren eine um mindestens 5 % gegenüber bisherigen Ansätzen verbesserte Performance beim Lokalisieren von Barcodes, ohne dass Parameter von Hand eingestellt werden müssten.

Hansen, Daniel Kold, et al, "Real-Time Barcode Detection and Classification using Deep Learning", IJCCI. 2017 erkennen Codebereiche einschließlich einer Verdrehung in Echtzeit mit einem Intel i5-6600 3.30 GHz und einer Nvidia GeForce GTX 1080.

Zharkov, Andrey; Zagaynov, Ivan, Universal Barcode Detector via Semantic Segmentation, arXiv preprint arXiv: 1906.06281, 2019 erkennen Barcodes und identifizieren den Codetyp in einer CPU-Umgebung.

Die DE 101 37 093 A1 offenbart ein Verfahren zum Erkennen eines Codes und einen Codeleser, bei dem der Schritt, den Code innerhalb einer Bildumgebung zu lokalisieren, mittels eines neuronalen Netzes durchgeführt wird. Training und Architektur des neuronalen Netzes werden nicht im Detail beschrieben. Die DE 10 2018 109 392 A1 schlägt zum Erfassen optischer Codes die Verwendung von Faltungsnetzen vor. Aus der US 10 650 211 B2 ist ein weiterer Codeleser bekannt, der Faltungsnetze für das Auffinden der Codes in einem aufgenommenen Bild verwendet.

Die EP 3 428 834 B1 nutzt einen klassischen Decoder, der mit Verfahren ohne maschinelles Lernen arbeitet, um einen für maschinelles Lernen ausgebildeten Klassifikator oder spezieller ein neuronales Netz zu trainieren. Mit der Vorverarbeitung oder dem Auffinden von Codebereichen befasst sich dieses Dokument jedoch nicht näher.

In der EP 3 916 633 A1 wird eine Kamera und ein Verfahren zum Verarbeiten von Bilddaten beschrieben, bei dem eine Segmentierung mittels neuronalen Netzes in einem Streaming-Verfahren erfolgt, d.h. Bilddaten schon verarbeitet werden, noch während weitere Bilddaten eingelesen werden. Zumindest die ersten Schichten des neuronalen Netzes können auf einem FPGA implementiert sein. Das verringert erheblich die Rechenzeiten und Anforderungen an die Hardware, aber die Segmentierung selbst wird dadurch nicht verbessert.

Im Stand der Technik wird bislang nur entweder eine klassische Segmentierung oder eine Segmentierung mit neuronalen Netzen durchgeführt. Die Möglichkeit, dass sich beide Arten der Segmentierung in ihren Stärken ergänzen und ihre Schwächen ausgleichen, wird damit nicht erkannt und nicht genutzt.

Es ist daher Aufgabe der Erfindung, die Segmentierung oder das Auffinden von Codebildbereichen weiter zu verbessern.

Diese Aufgabe wird durch ein computerimplementiertes Verfahren zum Auffinden von Codebildbereichen in einem Ausgangsbild eines codetragenden Objekts nach Anspruch 1 sowie einen optoelektronischen Codeleser nach Anspruch 15 gelöst. An dem Objekt ist mindestens ein optischer Barcode oder 2D-Code angebracht, oder jedenfalls wird das angenommen. In einer Aufnahme des Objekts, dem Ausgangsbild, findet sich daher mindestens ein Codebildbereich, ein Bildausschnitt (ROI, Region of interest) mit dem Code, wobei nicht ausgeschlossen ist, dass aufgrund der Aufnahmesituation oder Perspektive der Code nicht mit aufgenommen wurde, und es kann auch vorkommen, dass das Objekt tatsächlich gar keinen Code trägt oder diesen verloren hat. Das Ausgangsbild wird beispielsweise während einer Förderbewegung von einer Kamera an dem Förderer aufgenommen, oder das Objekt wird einer Kamera in deren Sichtfeld präsentiert.

Das Auffinden der Codebildbereiche, das auch als Segmentierung bezeichnet wird, ist vorzugsweise ein vorbereitender Schritt eines Verfahrens zum Lesen optischer Codes, bei dem anschließend die aufgefundenen Codebildbereiche einem Decoder zugeführt werden, der den Codeinhalt des Codes in dem jeweiligen Codebildbereich ausliest oder den Code decodiert.

Erste Kandidaten für Codebildbereiche werden in einem ersten Segmentierungsverfahren bestimmt. Das erste Segmentierungsverfahren arbeitet mit Methoden der klassischen Bildverarbeitung, beispielsweise mit von Hand gewählten und parametrierten Filtern. Die klassische Bildverarbeitung grenzt sich dadurch ab, dass kein Verfahren des maschinellen Lernens und insbesondere kein neuronales Netz eingesetzt wird. Klassisch soll hier demnach der Gegenbegriff zu maschinellem Lernen sein. Dabei sind das Setzen und die Anpassung von Parametern auch in der klassischen Bildverarbeitung möglich, das allein ist noch kein maschinelles Lernen. Wichtige praktische Unterschiede sind, dass die klassische Segmentierung schon mit ihrer Programmierung für ihre Aufgabe vorbereitet ist und nicht erst der Erfahrung beziehungsweise des Trainings bedarf, und dass ihre Leistungsfähigkeit von Anfang an bis über die gesamte Laufzeit mehr oder weniger konstant ist. Bei maschinellem Lernen hingegen hängt all dies bei Weitem nicht nur von einer programmierten Struktur ab, sondern ergibt sich erst im Zusammenhang mit dem Training und der Güte der Trainingsdaten. Eine herkömmliche klassische Segmentierung wäre mit der Bestimmung der ersten Kandidaten bereits abgeschlossen, die ersten Kandidaten wären die nach der Segmentierung aufgefundenen Codebildbereiche.

Die Erfindung geht von dem Grundgedanken aus, die klassische Segmentierung mit einer Segmentierung des maschinellen Lernens zu kombinieren. Dazu werden zweite Kandidaten für Codebildbereiche mit einem zweiten Segmentierungsverfahren mit maschinellem Lernen bestimmt. Eine herkömmliche Segmentierung, die auf maschinellem Lernen basiert, wäre allein mit der Bestimmung der zweiten Kandidaten, ohne Bestimmung erster Kandidaten, bereits abgeschlossen, die zweiten Kandidaten wären die nach der Segmentierung aufgefundenen Codebildbereiche.

Die mit den beiden unterschiedlichen Segmentierungsverfahren gefundenen ersten und zweiten Kandidaten werden erfindungsgemäß anschließend zusammengeführt, um die Codebildereiche aufzufinden. Es findet folglich eine gemeinsame Betrachtung der ersten und zweiten Kandidaten statt, eine Fusionierung der beiden Segmentierungen (smart fusion).

Die Erfindung hat den Vorteil, dass durch Kombination der beiden Segmentierungsverfahren deren jeweilige Stärken ausgenutzt werden können. Die klassische Segmentierung ist tendenziell zu feinkörnig und erzeugt zu viele falsch positive Codebildbereiche, die tatsächlich gar keinen Code enthalten, während die Segmentierung mit maschinellem Lernen zum Übersehen von Codes und damit falsch negativen Fehlern neigt. Wie schon einleitend erwähnt, kosten falsch positive Codebildbereiche wertvolle Rechenzeit, was womöglich indirekt zu einer reduzierten Leserate führt, da unter Echtzeit- oder Quasiechtzeitbedingungen zumindest einige Codebildbereiche nicht mehr ausgewertet werden können. Nicht gelesene Codes in übersehenen Codebildbereichen reduzieren die Leserate unmittelbar. Durch intelligentes Zusammenführen der beiden Segmentierungen können beide Fehler erster und zweiter Art verringert werden. Damit lässt sich effektiv die Feinkörnigkeit und Genauigkeit der klassischen Segmentierung mit der Selektivität der Segmentierung mit maschinellem Lernen vereinen, und die Gesamtleserate steigt.

Vorteilhafterweise erzeugt das erste Segmentierungsverfahren eine erste Ergebniskarte und/oder das zweite Segmentierungsverfahren eine zweite Ergebniskarte, wobei eine Ergebniskarte ein Bild geringerer Auflösung als das Ausgangsbild ist, dessen Pixel eine Information aufweisen, ob am Ort des Pixels ein Codebildbereich erkannt ist. Dies ist eine besonders einfach zu handhabende Repräsentation der ersten Kandidaten und zweiten Kandidaten als jeweilige Ergebniskarte (Heatmap). Insbesondere werden die beiden Ergebniskarten je nach Ausführungsform der Erfindung auf verschiedene Weisen kombiniert, um die Codebildbereiche aufzufinden (fusionierte Heatmap). Aufgrund der im Vergleich zum Ausgangsbild geringeren Auflösung steht jedes Pixel der Ergebniskarte für eine gewisse Region oder Kachel des Ausgangsbildes und gibt binär oder mit einem Scoring-Wert Auskunft, ob dies Teil eines Codebildbereichs ist oder nicht beziehungsweise wie wahrscheinlich in dieser Kachel ein Code(teil) aufgenommen wurde, womöglich noch mit Klassifikationsinformationen, wie um welchen Codetyp es sich vermutlich handelt.

Im Anschluss an das Auffinden der Kandidaten erfolgt vorzugsweise eine Feinsegmentierung, in der die Codebildbereiche feiner abgegrenzt werden, insbesondere in der Auflösung des Ausgangsbildes. Eine Information über die Position eines Codebildbereichs enthält noch nicht unbedingt die genauen Grenzen des Codes. Beispielsweise im Falle von Ergebniskarten ist der Codebildbereich nur in deren gröberer Auflösung lokalisiert. Die Feinsegmentierung verbessert die Grenzen der Codebildbereiche, vorzugsweise pixelgenau in der Auflösung des Ausgangsbildes. Es können erste Kandidaten, zweite Kandidaten und/oder nach der Fusionierung aufgefundene Codebildbereiche feinsegmentiert werden.

Ein Codebildbereich gilt bevorzugt dort in dem Ausgangsbild als aufgefunden, wo ein erster Kandidat und ein zweiter Kandidat bestimmt sind, oder alternativ dort, wo ein erster oder ein zweiter Kandidat bestimmt ist. Es findet somit eine logische UND-Verknüpfung oder alternativ eine logische ODER-Verknüpfung der beiden Segmentierungsverfahren statt. Bei einem UND müssen beide Segmentierungsverfahren einen Kandidaten bestätigen, damit ein Codebildbereich als aufgefunden gilt, bei einem ODER reicht ein Kandidat in nur einem der beiden Segmentierungsverfahren. Im Allgemeinen ist das UND beziehungsweise ODER semantisch zu verstehen, d.h. es werden kumulativ beide Bedingungen gestellt beziehungsweise es wird alternativ nur eine Bedingung gestellt. Im Falle von Ergebniskarten wird es vorzugsweise zu einer Bildverarbeitungsoperation, die Pixel mit UND beziehungsweise ODER verknüpft. Es werden also die erste und die zweite Ergebniskarte mittels UND beziehungsweise ODER zu einer dritten Ergebniskarte kombiniert. Sind die Ergebniskarten nicht binär, so ist eine Entsprechung zu wählen, etwa dass ein Scoring-Wert in beiden Pixeln oder ein addierter Scoring-Wert beider Pixel eine Schwelle überschreiten muss oder dass dies in einem der beiden Pixel genügt, um einen Codebildbereich aufzufinden. Die Kombination mittels UND ist tendenziell zu scharf, es können dabei Codebildbereiche verlorengehen. Es kommt hier eher zu falsch negativen und kaum noch falsch positiven Fehlern. Umgekehrt ist die Kombination mittels ODER tendenziell zu weich, es resultieren zu viele vorgebliche Codebildbereiche, während kaum Codebildbereiche übersehen werden. Vorzugsweise folgen deshalb zusätzliche Schritte wie im Anschluss beschrieben, um beide Fehlerarten weiter zu reduzieren.

Die ersten Kandidaten werden bevorzugt zu zusammenhängenden Bildbereichen ergänzt, insbesondere mittels Connected-Components-Verfahren, wobei nur kleine erste Kandidaten erhalten bleiben, die kleiner sind als eine Schwellengröße, und wobei insbesondere die kleinen ersten Kandidaten zusätzlich als Codebildbereiche angesehen werden. Dieser Schritt folgt vorzugsweise, nachdem erste Kandidaten und zweite Kandidaten bereits einmal fusioniert wurden, insbesondere zu einer dritten Ergebniskarte, um zusätzliche Codebildbereiche aufzufinden. Gerade nach einer UND-Verknüpfung sind kleine Codebildbereiche tendenziell eliminiert, weil das zweite Segmentierungsverfahren mit maschinellem Lernen sie übersehen und damit nicht bestätigt hat. Deshalb werden die Ergebnisse des ersten Segmentierungsverfahrens nochmals nachbearbeitet, um gezielt kleine erste Kandidaten und in Folge kleine Codebildbereiche zu finden. Die ersten Kandidaten werden zunächst zu Zusammenhangskomponenten oder sogenannten Blobs vervollständigt. Dann wird ein Größenfilter angewandt, der nur kleine erste Kandidaten behält. Das Größenfilter basiert beispielsweise auf einer Pixelzahl oder einem anderen Maß, wie Länge, Breite oder Durchmesser. Die kleinen ersten Kandidaten gelten dann vorzugsweise als zusätzliche Codebildbereiche. Sie können in einer vierten Ergebniskarte gefunden beziehungsweise gesammelt werden. Dann kann insbesondere die dritte Ergebniskarte mittels ODER mit der vierten Ergebniskarte kombiniert werden, um eine fünfte Ergebniskarte zu erhalten. Insgesamt ergibt sich in diesem Fall die fünfte Ergebniskarte als erste Ergebniskarte UND zweite Ergebniskarte (gleich dritte Ergebniskarte) ODER vierte Ergebniskarte. Diese fünfte Ergebniskarte zeigt nun an, wo sich Codebildbereiche befinden, die das erste Segmentierungsverfahren und das zweite Segmentierungsverfahren gefunden haben, plus Codebildbereiche entsprechend den kleinen ersten Kandidaten.

Die zweiten Kandidaten werden vorzugsweise zu zusammenhängenden Bildbereichen ergänzt, insbesondere mittels Connected-Components-Verfahren, wobei nur exklusive zweite Kandidaten erhalten bleiben, deren Position nicht mit einer Position eines schon aufgefundenen Codebildbereichs übereinstimmt, und wobei insbesondere die exklusiven zweiten Kandidaten zusätzlich als Codebildbereiche angesehen werden. Auch das zweite Segmentierungsverfahren kann noch einmal nachbetrachtet werden. Erneut geht es vorzugsweise darum, dass eine UND-Verknüpfung möglicherweise einen zweiten Kandidaten verloren hat, weil es keinen korrespondierenden ersten Kandidaten gibt. Es dürfen aber nicht einfach die vergleichsweise großen zweiten Kandidaten die ersten Kandidaten im Sinne einer ODER-Verknüpfung überschreiben. Der typische Fehlerfall ist ein Stapelcode mit mehreren kleinen Barcodes übereinander. Das feinere erste Segmentierungsverfahren kann diese Barcodes auftrennen. Diese aufgetrennten Codebildbereiche sollen nicht durch einen großflächigen zweiten Kandidaten verschmolzen werden. Deshalb wird zunächst nach exklusiven zweiten Kandidaten gesucht, nämlich geprüft, ob an der Position des jeweiligen zu einer Zusammenhangskomponente beziehungsweise einem Blob angewachsenen zweiten Kandidaten nicht bereits ein Codebildbereich aufgefunden war. Nur wenn das nicht der Fall ist, handelt es sich um einen exklusiven zweiten Kandidaten, und nur die exklusiven zweiten Kandidaten werden als zusätzliche Codebildbereiche hinzugefügt. Die exklusiven zweiten Kandidaten können in einer sechsten Ergebniskarte gefunden beziehungsweise gesammelt werden, und das Zusammenführen findet dann auf Ebene von Ergebniskarten statt. Die sechste Ergebniskarte kann mittels ODER mit der dritten Ergebniskarte oder mit der fünften Ergebniskarte verknüpft werden. Daraus resultiert eine siebte Ergebniskarte oder Gesamtergebniskarte.

Besonders bevorzugt werden kleine erste Kandidaten und exklusive zweite Kandidaten zu einer UND-Verknüpfung der ersten Kandidaten und zweiten Kandidaten hinzugefügt. Unter Verwendung von Ergebniskarten führt das zu folgender Kaskade: Die erste Ergebniskarte der ersten Kandidaten wird mit der zweiten Ergebniskarte der zweiten Kandidaten zu einer dritten Ergebniskarte UND-verknüpft. Die ersten Kandidaten werden zu zusammenhängenden Blobs angewachsen und nur Blobs bis zu einer Schwellen- oder Höchstgröße als kleine erste Kandidaten behalten, das ergibt eine vierte Ergebniskarte. Die dritte Ergebniskarte und die vierte Ergebniskarte werden zu einer fünften Ergebniskarte ODER-verknüpft. Die zweiten Kandidaten werden zu zusammenhängenden Blobs angewachsen und nur Blobs als exklusive zweite Kandidaten behalten, die nicht bereits aufgefundenen Codebildbereichen entsprechen, das ergibt eine sechste Ergebniskarte. Die ODER-Verknüpfung der fünften Ergebniskarte und der sechsten Ergebniskarte resultiert in der Gesamtergebniskarte mit allen Codebildbereichen, die nach dieser bevorzugten Ausführungsform aufgefunden wurden.

Zu den ersten Kandidaten, zweiten Kandidaten und/oder Codebildbereichen wird bevorzugt eine Wertzahl (Scoring, Score-Wert) bestimmt, die angibt, wie verlässlich an der repräsentierten Position ein optischer Code im Ausgangsbild erkannt ist. Damit können die UND- beziehungsweise ODER-Verknüpfungen weiter differenziert werden, beispielsweise mittels Voting oder Gewichtung. Ist den Codebildbereichen eine Wertzahl zugewiesen, in die bevorzugt Wertzahlen der zugrundeliegenden Kandidaten einfließen, so kann das nachgelagerte Decodieren entsprechend priorisiert werden und bei begrenzter verfügbarer Decodierzeit mit den aussichtsreichsten Codebildbereichen beginnen. Eine Wertzahl ermöglicht auch eine Verallgemeinerung auf zusätzliche Klassifikationsergebnisse, die über ein binäres "Code / kein Code" hinausgehen und beispielsweise Codetypen beinhalten.

Vorzugsweise werden erste Kandidaten für 1D-Codes, erste Kandidaten für 2D-Codes, zweite Kandidaten für 1D-Codes und/oder zweite Kandidaten für 2D-Codes bestimmt. Es wird folglich für die Kandidaten noch zwischen 1D-Codes (Barcodes) und 2D-Codes unterschieden. Die Codes können in sich noch weiter nach den verschiedenen bekannten Codetypen unterschieden werden. Der nachgelagerte Decoder erhält durch eine solche Differenzierung einen wichtigen Hinweis, welche priorisierten Leseversuche mit welchen Decodierverfahren am ehesten zum Erfolg führen, und nutzt so die verfügbare Decodierzeit besser aus.

Erste Kandidaten für 2D-Codes, die nicht zugleich zweite Kandidaten sind, werden bevorzugt als Textbildbereich innerhalb des Ausgangsbilds angesehen. In solchen Bildbereichen wurde von der klassischen Bildverarbeitung des ersten Segmentierungsverfahrens eine auffällige Struktur erkannt. Zugleich hat das zweite Segmentierungsverfahren mit maschinellem Lernen in diesem Bildbereich keine Form von Code identifizieren können. Es spricht dann einiges dafür, dass die Struktur, auf die die klassische Bildverarbeitung angesprochen hat, ein Textbereich ist. Diese Information kann sozusagen als Nebenprodukt zur Weiterverarbeitung an eine OCR-Engine (Optical Character Recogition, Texterkennung) geliefert werden, die daraus ähnliche Vorteile zieht wie der Decoder aus den Codebildbereichen. Die Textbereiche können wiederum in Form einer weiteren Ergebniskarte (OCR-Ergebniskarte, OCR-Heatmap) verarbeitet und ausgegeben werden.

Das erste Segmentierungsverfahren bestimmt bevorzugt erste Kandidaten in einem in Kacheln unterteilten Ausgangsbild. Dadurch müssen jeweils nur kleine Bildausschnitte bearbeitet werden, um beispielsweise einen Kontrast zu bestimmen oder Helligkeitskanten zu zählen. Die Kacheln können iterativ nacheinander, aber auch in beliebiger Abstufung parallel abgearbeitet werden. Die erste Ergebniskarte enthält vorzugsweise ein Pixel je Kachel. Die Auflösung der zweiten Ergebniskarte ist entweder gleich, d.h. das zweite Segmentierungsverfahren entsprechend ausgestaltet, oder es findet eine Normierung zur Auflösungsanpassung statt.

Das erste Segmentierungsverfahren weist bevorzugt eine Kontrastbestimmung auf, in der erste Kandidaten einen Mindestkontrast aufweisen müssen. Die Hell-Dunkel-Übergänge der Codeelemente sorgen für einen hohen Kontrast, so dass hoher Kontrast ein gutes Unterscheidungskriterium ist, erste Kandidaten für Codebildbereiche zu erkennen. Die Bewertung des Kontrasts bezieht sich vorzugsweise jeweils auf eine Kachel.

In dem ersten Segmentierungsverfahren werden bevorzugt längs zweier Linien quer zueinander Helligkeitskanten gezählt, um anhand der jeweiligen Anzahl Helligkeitskanten eine Vorzugsrichtung zu bestimmen, und nur im Falle einer Vorzugsrichtung ist ein erster Kandidat für einen 1D-Code erkannt, und insbesondere ist sonst ein erster Kandidat für einen 2D-Code erkannt. Die beiden Linien bilden eine Art Testkreuz für beide Richtungsdimensionen in der Ebene des Ausgangsbildes. Zumindest eine Linie verläuft quer zu den Balken eines Barcodes und daher durch eine hohe Anzahl Helligkeitskanten, sofern der zu testende Bereich einen Barcode enthält. Trifft dies für keine der beiden Linien zu, so wird ausgeschlossen, dass ein Barcode vorliegt. Wenn die Prüfung eines Kriteriums vorausgegangen ist, das eine Struktur erkennt, etwa ein hoher Kontrast, so ist diese Struktur kein Barcode und kann deshalb insbesondere als 2D-Code vermutet werden. Das wird dann womöglich durch das zweite Segmentierungsverfahren bestätigt, oder es wird in einer weitergehenden Prüfung nach Finder Patterns eines 2D-Codes gesucht. Andere Möglichkeiten sind ein Streudruck, ein Textbereich oder eine Fehleinschätzung der vorausgegangenen Kriterien. Auch das Testkreuz bezieht sich vorzugsweise auf eine Kachel.

Das zweite Segmentierungsverfahren weist bevorzugt ein neuronales Netz auf, insbesondere ein tiefes neuronales Netz beziehungsweise ein Faltungsnetz (CNN, Convoluational Neural Network). Das ist ein für die Bildverarbeitung besonders bewährtes Verfahren des maschinellen Lernens. Das zweite Segmentierungsverfahren kann damit besonders zuverlässig zweite Kandidaten für Codebildbereiche bestimmen.

Das neuronale Netz wird bevorzugt mittels überwachten Lernens anhand von Beispielbildern trainiert, die insbesondere anhand der Ergebnisse eines Segmentier- und/oder Decodierverfahrens ohne Verfahren des maschinellen Lernens bewertet sind. Das überwachte Lernen (supervised learning) ermöglicht, aus einem Trainingsdatensatz mit Beispielen einer vorgegebenen richtigen Bewertung auf später im Betrieb präsentierte Ausgangsbilder zu verallgemeinern. Entsprechende Architekturen von neuronalen Netzen und Algorithmen für Training wie Betrieb (Inferenz) sind für sich bekannt, so dass auf gut funktionierende Lösungen zurückgegriffen oder darauf aufgesetzt werden kann. Einige Literaturstellen wurden einleitend genannt. Die Zuweisung der richtigen Bewertung zu einem Beispielbild, also das Annotieren oder Labeling, kann prinzipiell von Hand erfolgen, da das Training vor der Laufzeit stattfindet. Weiterhin kann das zweite Segmentierungsverfahren zumindest teilweise mit Beispielbildern trainiert werden, die das erste Segmentierungsverfahren bewertet hat. Das reproduziert am Ende keineswegs nur das erste Segmentierungsverfahren mit anderen Mitteln, da das neuronale Netz durch das Training seine eigene Bewertung und Verallgemeinerung findet. Ferner kann mindestens ein klassischer Decoder herangezogen werden, der Beispielbilder auswertet und der Codebildbereiche retrospektiv nur als Positivbeispiel annotiert, wenn dort tatsächlich ein Code gelesen werden könnte.

Der erfindungsgemäße optoelektronische Codeleser weist ein Lichtempfangselement zur Erzeugung von Bilddaten aus Empfangslicht und somit zur Aufnahme des Ausgangsbildes auf. Der Lichtempfänger kann derjenige eines Barcodescanners sein, beispielsweise eine Photodiode, und die Intensitätsprofile der Scans werden zeilenweise zu dem Ausgangsbild zusammengesetzt. Vorzugsweise handelt es sich um einen Bildsensor eines kamerabasierten Codelesers. Der Bildsensor wiederum kann ein Zeilensensor zur Erfassung einer Codezeile oder eines flächigen Codebildes durch Zusammensetzen von Bildzeilen oder ein Matrixsensor sein, wobei auch Aufnahmen eines Matrixsensors zu einem größeren Ausgangsbild zusammengefügt sein können. Ein Verbund mehrerer Codeleser oder Kameraköpfe ist ebenfalls denkbar. In einer Steuer- und Auswertungseinheit, die selbst Teil eines Barcodescanners oder eines kamerabasierten Codelesers oder als Steuerungsgerät daran angeschlossen sein kann, ist ein erfindungsgemäßes Verfahren zum Auffinden von Codebildbereichen nach einer der beschriebenen Ausführungsformen implementiert. Die Codebildbereiche werden anschließend nach außen kommuniziert und/oder decodiert, um die Codeinhalte der Codes in den Codebildbereichen zu lesen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung der beispielhaften Montage eines Codelesers über einem Förderband, auf dem Objekte mit zu lesenden Codes gefördert werden;
- Fig. 2a: ein beispielhaftes Ausgangsbild, das von einem Codeleser aufgenommen wurde;
- Fig. 2b: in dem Ausgangsbild gemäß Figur 2a mit einem klassischen Segmentierungsverfahren bestimmte erste Kandidaten für Codebildbereiche;
- Figur 2c: in dem Ausgangsbild gemäß Figur 2a mit einem Segmentierungsverfahren mit einem neuronalen Netz bestimmte zweite Kandidaten für Codebildbereiche;
- Fig. 3: ein beispielhaftes Ablaufdiagramm für ein klassisches Segmentierungsverfahren;
- Fig. 4: ein beispielhaftes Ablaufdiagramm für ein Segmentierungsverfahren mit einem neuronalen Netz;
- Fig. 5: ein beispielhaftes Ablaufdiagramm für ein Zusammenführen der Ergebnisse eines klassischen Segmentierungsverfahrens und eines Segmentierungsverfahrens mit einem neuronalen Netz zum Auffinden von Codebildbereichen;
- Fig. 6a: eine erste Ergebniskarte, die nochmals ähnlich Figur 2b die mit einem klassischen Segmentierungsverfahren bestimmten ersten Kandidaten für Codebildbereiche darstellt;
- Fig. 6b: eine zweite Ergebniskarte, die wie Figur 2c die mit einem Segmentierungsverfahren mit einem neuronalen Netz bestimmten zweiten Kandidaten für Codebildbereiche darstellt;
- Fig. 6c: eine dritte Ergebniskarte, die eine UND-Verknüpfung der ersten Ergebniskarte gemäß Figur 6a und der zweiten Ergebniskarte gemäß Figur 6b darstellt;
- Fig. 7a: die erste Ergebniskarte gemäß Figur 6a in einer bereinigten Darstellung ohne überlagerte Informationen des Ausgangsbildes;
- Fig. 7b: eine Darstellung von zusammenhängenden Blobs, die aus den ersten Kandidaten der ersten Ergebniskarte gemäß Figur 7a durch ein Connected-Components-Verfahren erzeugt sind;
- Fig. 7c: eine vierte Ergebniskarte derjenigen Blobs gemäß Figur 7b, die kleiner sind als eine Schwellengröße;
- Fig. 7d: eine fünfte Ergebniskarte, in der die dritte Ergebniskarte gemäß Figur 6c mit der vierten Ergebniskarte gemäß Figur 7c mittels ODER verknüpft ist;
- Fig. 8a: nochmals zum direkten Vergleich die zweite Ergebniskarte gemäß Figur 6b;
- Fig. 8b: nochmals zum direkten Vergleich die fünfte Ergebniskarte gemäß Figur 7d;
- Fig. 8c: eine sechste Ergebniskarte, in der exklusive zweite Kandidaten der zweiten Ergebniskarte gemäß Figur 8a identifiziert sind, die sich nicht an der Position eines ersten Kandidaten oder kleinen ersten Kandidaten befinden; und
- Fig. 8d: eine siebte Ergebniskarte oder Gesamtergebniskarte, in der die fünfte Ergebniskarte gemäß Figur 8b und die sechste Ergebniskarte gemäß Figur 8c mittels ODER verknüpft sind.

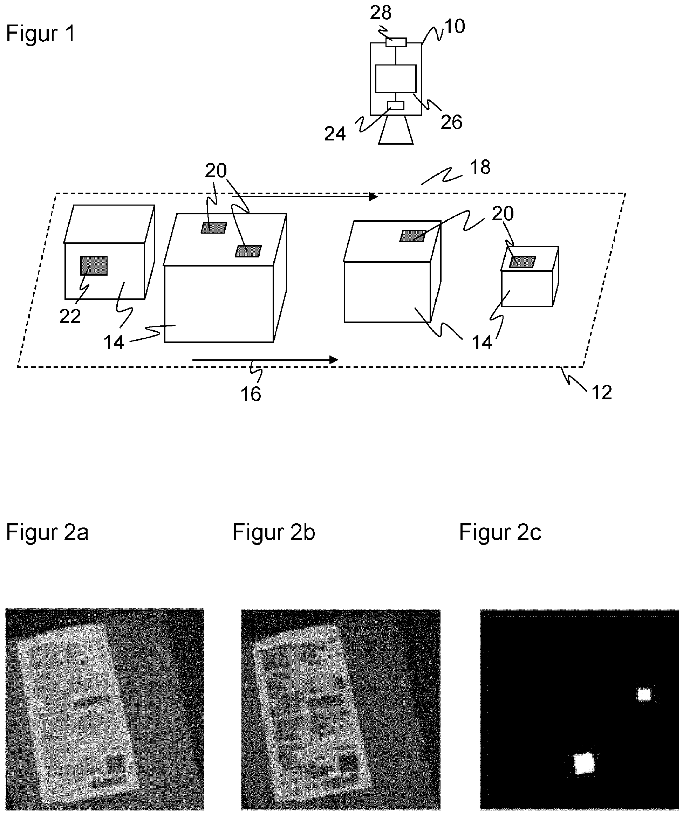

Figur 1 zeigt einen optoelektronischen Codeleser 10 in einer bevorzugten Anwendungssituation montiert über einem Förderband 12, welches Objekte 14, wie durch den Pfeil 16 angedeutet, durch den Erfassungsbereich 18 des Codelesers 10 fördert. Die Objekte 14 tragen an ihren Außenflächen Codebereiche 20, die von dem Codeleser 10 erfasst und ausgewertet werden. Diese Codebereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber zunächst auf den Codeleser 10 selbst beziehungsweise das darin implementierte Verfahren zum Decodieren von Codes oder noch konkreter einen Vorverarbeitungsschritt dazu, so dass dieses Beispiel nicht einschränkend verstanden werden darf.

Der Codeleser 10 erfasst mit einem Bildsensor 24 Bilddaten der geförderten Objekte 14 und der Codebereiche 20, die von einer Steuer- und Auswertungseinheit 26 mittels Bildauswertung und Decodierverfahren weiterverarbeitet werden. Es kommt für die Erfindung nicht auf das konkrete Bildgebungsverfahren an, so dass der Codeleser 10 nach irgendeinem an sich bekannten Prinzip aufgebaut sein kann. Beispielsweise wird jeweils nur eine Zeile erfasst, sei es mittels zeilenförmigem Bildsensor oder einem Scanverfahren, wobei im letztgenannten Fall als Bildsensor 24 ein einfacher Lichtempfänger wie eine Photodiode ausreicht. Die Steuer- und Auswertungseinheit 26 fügt die im Laufe der Förderbewegung erfassten Zeilen zu den Bilddaten zusammen. Mit einem matrixförmigen Bildsensor lässt sich schon in einer Aufnahme ein größerer Bereich erfassen, wobei auch hier das Zusammenfügen von Aufnahmen sowohl in Förderrichtung als auch quer dazu möglich ist. Die mehreren Aufnahmen werden nacheinander und/oder von mehreren Codelesern 10 aufgenommen, die beispielsweise mit ihren Erfassungsbereichen 18 nur gemeinsam die gesamte Breite des Förderbands 12 abdecken, wobei jeder Codeleser 10 nur einen Teilabschnitt des Gesamtbildes aufnimmt und die Teilabschnitte durch Bildverarbeitung (Stitching) zusammengefügt werden. Auch ein nur fragmenthaftes Decodieren innerhalb einzelner Teilabschnitte mit anschließendem Zusammenfügen der Codefragmente ist denkbar.

Aufgabe des Codelesers 10 ist, die Codebereiche 20 zu erkennen und die dort angebrachten Codes auszulesen. Das Erkennen der Codebereiche 20 beziehungsweise der ihnen entsprechenden Codebildbereiche in einem aufgenommenen Bild wird auch als Segmentierung oder Vorsegmentierung bezeichnet und wird weiter unten anhand der Figuren 2a bis 8d im Detail erläutert.

Über eine Schnittstelle 28 gibt der Codeleser 10 Informationen aus, wie gelesene Codes oder Bilddaten. Es ist auch denkbar, dass die Steuer- und Auswertungseinheit 26 nicht in dem eigentlichen Codeleser 10, also der in Figur 1 gezeigten Kamera angeordnet ist, sondern als eigenes Steuerungsgerät an einen oder mehrere Codeleser 10 angeschlossen wird. Dann dient die Schnittstelle 28 auch als Verbindung zwischen interner und externer Steuerung und Auswertung. Die Steuer- und Auswertungsfunktionalität kann praktisch beliebig auf interne und externe Bausteine verteilt werden, wobei die externen Bausteine auch über Netzwerk oder Cloud angeschlossen sein können. Das alles wird hier nicht weiter unterschieden und die Steuer- und Auswertungseinheit 26 unabhängig von der konkreten Implementierung als Teil des Codelesers 10 aufgefasst. Die Steuer- und Auswertungseinheit 26 kann mehrere Bausteine aufweisen, wie ein FPGA (Field Programmable Gat Array), einen Mikroprozessor (CPU) und dergleichen. Insbesondere für die noch zu beschreibende Segmentierung mit einem neuronalen Netz können spezialisierte Hardwarebausteine eingesetzt sein, etwa ein KI-Prozessor, eine NPU (Neural Processing Unit), eine GPU (Graphics Processing Unit) oder dergleichen. Die Verarbeitung der Bilddaten, insbesondere die Segmentierung, kann on-the-fly noch während des Einlesens der Bilddaten oder während des Streamings erfolgen, insbesondere in der Art, wie dies für ein neuronales Netz eines Codelesers in der einleitend genannten EP 3 916 633 A1 beschrieben ist.

Figur 2a zeigt ein beispielhaftes Ausgangsbild, das beispielsweise mit dem Codeleser 10 gemäß Figur 1 aufgenommen wurde und das alternativ aus einer beliebigen anderen Quelle stammt. Man erkennt im Hintergrund ein Paket mit einem weißen Etikett im Vordergrund, das zahlreiche Beschriftungen einschließlich mehrerer optischer Codes aufweist. Ziel der nun zu beschreibenden Segmentierung ist, die Codebildbereiche mit den Codes zu lokalisieren.

Figur 2b zeigt das Ergebnis einer ersten klassischen Segmentierung. Die dadurch aufgefundenen ersten Kandidaten für Codebildbereiche oder interessierenden Bereiche (ROI, Region of interest) sind hervorgehoben. Sie sind als erste Kandidaten zur Abgrenzung gegen die später eingeführten zweiten Kandidaten einer zweiten Segmentierung mit einem neuronalen Netz bezeichnet. Erkennbar gibt es zu viele erste Kandidaten, die noch zahlreiche falsch positive Codebildbereiche umfassen.

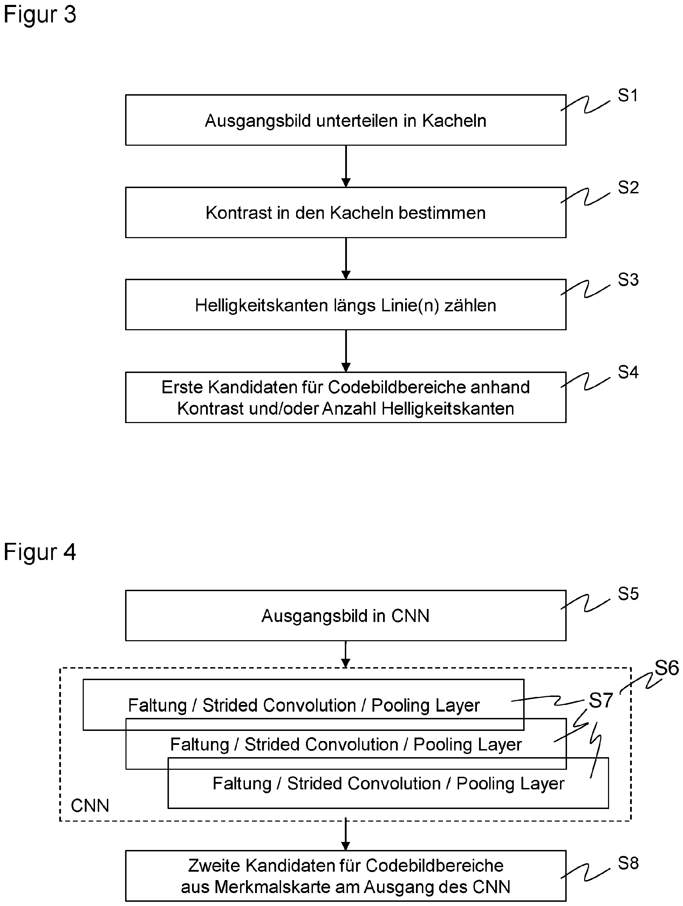

Figur 3 zeigt ein Ablaufdiagramm für ein klassisches Segmentierungsverfahren, dessen Ergebnis in Figur 2b beispielhaft illustriert ist. Die klassische Segmentierung basiert im Allgemeinen auf vergleichsweise einfachen Rechenregeln, die auch von einem FPGA durchgeführt werden können. Die hier dargestellte klassische Segmentierung ist rein beispielhaft zu verstehen, es können jegliche Bildverarbeitungsverfahren eingesetzt werden, die an sich für die Segmentierung bekannt sind, wobei für das klassische Segmentierungsverfahren die Einschränkung besteht, dass kein Verfahren des maschinellen Lernens und damit insbesondere kein neuronales Netz Verwendung findet.

In einem Schritt S1 wird das Ausgangsbild in Kacheln unterteilt, d.h. in Bildabschnitte von beispielsweise 10x10 oder eine andere Anzahl von Pixeln, die sich auch in X- und Y-Richtung unterscheiden kann. Die weitere Verarbeitung kann dann kachelweise erfolgen, wobei eine Parallelisierung über mehrere Kacheln möglich ist.

In einem Schritt S2 wird je Kachel der Kontrast bestimmt, denn ein homogener Bereich mit wenig Kontrast enthält keinen Code. Zur Kontrastbestimmung können bereits on-the-fly beispielsweise auf einem FPGA die Grauwerte der eingelesenen Pixel und deren Quadrate aufsummiert werden, denn aus diesen Summenwerten ist dann ohne erneuten Pixelzugriff die Bestimmung von Mittelwert und Standardabweichung möglich, wobei letzteres ein Kontrastmaß ist.

In einem Schritt S3 werden längs einer Linie, vorzugsweise auf einem Testkreuz zweier Linien senkrecht zueinander, Übergänge von Hell nach Dunkel oder umgekehrt gezählt. Das sind potentielle Kanten zwischen Codeelementen, von denen in einem Codebildbereich eine Mindestanzahl erwartet wird.

In einem Schritt S4 erfolgt eine Kontrastbewertung insbesondere gegen eine Kontrastschwelle. Kacheln mit zu geringem Kontrast werden verworfen, sie sind keine ersten Kandidaten für Codebildbereiche. Diese Bewertung kann schon direkt bei Schritt S2 erfolgen, für die derart eliminierten Kacheln müssen dann gar nicht erst noch Helligkeitskanten bestimmt werden. In Kacheln mit ausreichend Kontrast wird die Anzahl Helligkeitskanten gegen eine Kantenschwelle verglichen, und Kacheln mit einer zu geringen Anzahl werden ebenfalls verworfen. Schließlich ist als weiteres Kriterium speziell zum Auffinden von Codebildbereichen mit Barcodes denkbar, die Anzahl Helligkeitskanten längs der beiden Linien des Testkreuzes auszuwerten, um festzustellen, ob es eine Vorzugsrichtung mit einer hohen Anzahl Helligkeitskanten gibt. Kacheln ohne eindeutige Vorzugsrichtung enthalten keinen Barcode und werden verworfen oder womöglich noch als Streudruck, Textbereich oder 2D-Codebildbereiche bewertet. Wie erwähnt, zeigt Figur 3 nur ein Beispiel einer klassischen Segmentierung. Insbesondere sind weitere Schritte denkbar, etwa eine Nachanalyse von Kacheln, die zumindest die direkt benachbarten Kacheln noch einbezieht.

Figur 2c zeigt das Ergebnis einer zweiten Segmentierung unter Verwendung eines neuronalen Netzes. Die dadurch aufgefundenen zweiten Kandidaten für Codebildbereiche oder interessierenden Bereiche (ROI, Region of interest) sind hervorgehoben. Es werden gegenüber den ersten Kandidaten der klassischen Segmentierung nur vergleichsweise wenige zweite Kandidaten bestimmt. Dafür hat die zweite Segmentierung einen sehr kontrastschwachen zweiten Kandidaten erkannt, den die klassische Segmentierung übersehen hat und der selbst mit dem bloßen Auge nicht zu erkennen ist.

Figur 4 zeigt ein beispielhaftes Ablaufdiagramm für ein Segmentierungsverfahren mit einem Verfahren des maschinellen Lernens, dessen Ergebnis in Figur 2c beispielhaft illustriert ist. Besonders geeignet dafür ist ein neuronales Netz, insbesondere ein tiefes neuronales Netz beziehungsweise ein Faltungsnetz (Convolutional Neural Network, CNN).

In einem Schritt S5 wird das Ausgangsbild der Eingangsschicht des neuronalen Netzes zugeführt. Die beiden zu Figur 3 und Figur 4 erläuterten Segmentierungen können nacheinander oder parallel zueinander erfolgen.

In einem Schritt S6 erzeugt das neuronale Netz in mehreren Schichten S7 aus den Eingängen die zweiten Kandidaten für Codebildbereiche (Inferenz). Es sind rein beispielhaft drei Schichten S7 dargestellt, die Architektur des neuronalen Netzes soll nicht beschränkt sein, und es sind die üblichen Werkzeuge wie Vorwärts- und Rückwärtsverknüpfung (Feedforward, Feedback oder Recurrent), das Auslassen von Schichten (Res-Nets) und dergleichen möglich. Charakteristisch für ein Faltungsnetz sind die Faltungsschichten, die das Ausgangsbild beziehungsweise in tieferen Schichten die Merkmalskarte der vorangehenden Schicht effektiv mit einem lokalen Filter falten. Dabei sind Auslösungsverluste (Downsampling) durch größere Verschiebungsschritte des Filters möglich (Strided Convolution, Pooling Layer). Die Reduktion der Auslösung insbesondere in frühen Schichten ist erwünscht, um die Inferenz überhaupt schnell genug und mit begrenzten Ressourcen leisten zu können. Entgegen der Darstellung kann das neuronale Netz auch Schichten ohne Faltung oder Pooling umfassen.

Das neuronale Netz wird vorab anhand von Beispielbildern mit bekannten Codebildbereichen trainiert (Supervised Learning, überwachtes Lernen). Solche Beispielbilder können von Hand bewertet werden (Labelling, Annotating). Andererseits ist möglich, mit einem klassischen Decoder samt klassischer Segmentierung Beispielbilder auszuwerten und Codebildbereiche retrospektiv anhand tatsächlich lesbarer Codes zu erkennen. Gerade ohne Zeitdruck im Offline-Modus sind solche klassischen Mittel sehr mächtig, so dass eine Vielzahl von Trainingsbeispielen automatisch generiert werden kann.

In einem Schritt S7 hat das neuronale Netz seine Inferenz abgeschlossen, und die Merkmalskarte an seinem Ausgang liefert die gesuchten zweiten Kandidaten für Codebildbereiche.

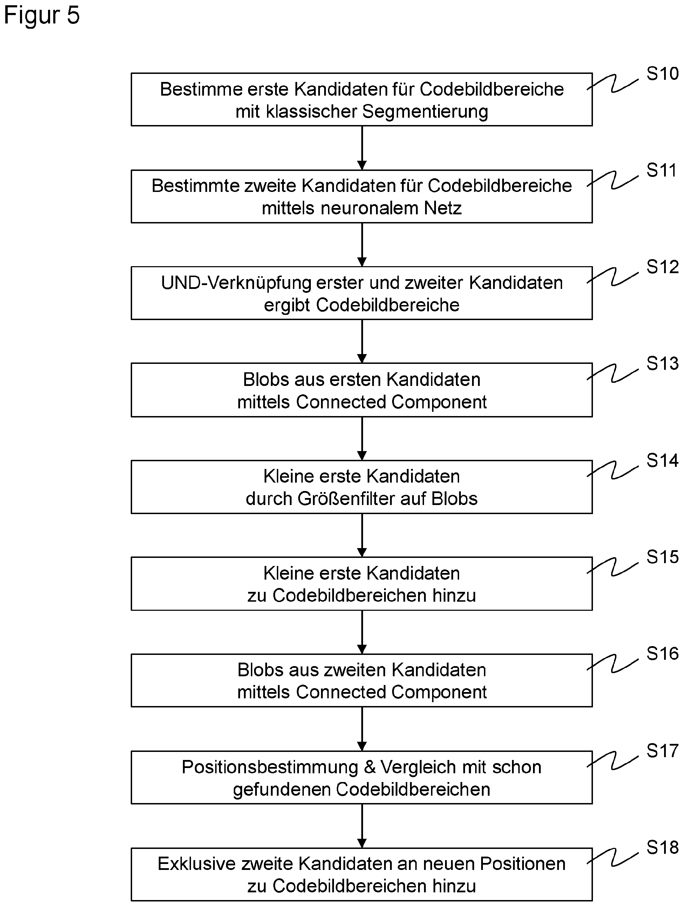

Im Anschluss an die zu Figur 3 erläuterte klassische Segmentierung und/oder die zu Figur 4 erläuterte Segmentierung mit neuronalem Netz ist noch eine Feinsegmentierung möglich. Die ersten Kandidaten und die zweiten Kandidaten werden vorzugsweise in Form einer Ergebniskarte (Heatmap) bestimmt. Das ist ein Bild einer Auflösung, das den Kacheln beziehungsweise der letzten Merkmalskarte am Ausgang des neuronalen Netzes entspricht und dessen Pixel somit einen gewissen Bereich des höher aufgelösten Ausgangsbildes repräsentieren. Im Falle einer binären Ergebniskarte zeigt ein Pixel an, ob in dem repräsentierten Bildabschnitt des Ausgangsbildes ein Codebildbereich liegt oder nicht. Alternativ können numerische Werte der Pixel eine Bewertung der Wahrscheinlichkeit für einen Code (Scoring-Wert) und/oder einen bestimmten Codetyp anzeigen. Die ersten Kandidaten bilden eine erste Ergebniskarte, die zweiten Kandidaten eine zweite Ergebniskarte. Wie unter Bezugnahme auf die Figur 5 noch zu erläutern, werden die Ergebnisse der beiden Segmentierungen fusioniert, auch die daraus resultierenden Codebildbereiche können in Form einer weiteren Ergebniskarte dargestellt werden.

Auf den Ergebniskarten, und zwar auf einzelnen, mehreren oder allen Ergebniskarten, können optional noch nachgelagerte Algorithmen arbeiten. Ein Beispiel ist eine Differenzierung von Barcodes anhand ihrer Vorzugsrichtung. Ein weiteres Beispiel ist eine Feinsegmentierung. Dabei werden Codebildbereiche nicht mehr auf der groben Auflösung von Kacheln oder Merkmalskarten bestimmt, sondern in feinerer Auflösung bis hin zur Ursprungsauflösung des Ausgangsbildes. Dies kann iterativ im Wechselspiel mit jeweiligen Decodierversuchen erfolgen, denn sobald das Ziel erreicht ist, die Codeinformation auszulesen, wären weitere Verfeinerungen der Segmentierung nur noch Selbstzweck.

Umgekehrt sollte durch möglichst fehlerfreie Segmentierung verhindert werden, dass Feinsegmentierung und Decoder sich aufwändig durch verschiedene Versuche arbeiten, obwohl tatsächlich in den bearbeiteten Bildabschnitten gar kein Code vorhanden ist.

Um eine geringe Fehlerrate der aufgefundenen Codebildbereiche zu erreichen, werden die Ergebnisse der beiden Segmentierungen fusioniert. Ausgangspunkt hierbei ist, dass beide Segmentierungen ein recht unterschiedliches Fehlerverhalten zeigen. Die klassische Segmentierung bewertet mit ihren Kacheln nur einen eng begrenzten, lokalen Bereich. Sie bewertet feine Strukturen und ist deshalb sehr empfindlich. Das ist teilweise parametrierbar, erfordert damit aber auch händisches Einstellen. Die hohe Empfindlichkeit ist einerseits erwünscht, denn dadurch werden auch kleine Codebildbereiche noch erkannt. Andererseits kann die klassische Segmentierung schlecht zwischen codeähnlichen Hintergrundstrukturen, wie beispielsweise Schrift, Logos oder Paketbändern, und tatsächlichen Coderegionen unterscheiden. Es ergibt sich daher eine vergleichsweise hohe falsch positive Fehlerzahl.

Die zweite Segmentierung bewertet im Grunde das ganze Ausgangsbild. Durch bestimmte Faltungsschichten wird je nach Ausgestaltung (Dilution, Strides, Pooling) die Auflösung reduziert, was implizit in der Merkmalskarte am Ausgang zu einer Kacheln entsprechenden Auflösung führt. Dennoch ist in diese Merkmale Information einer grö-ßeren Nachbarschaft eingeflossen. Die Unterscheidungsfähigkeit zwischen Hintergrundstrukturen und tatsächlichen Coderegionen ist groß, es gibt unter den zweiten Kandidaten so gut wie keine falsch positiven Codebildbereiche. Auch kontrastschwache Codes sowie Codes in unterschiedlichen Markierungstechniken, etwa in Metall geprägte Codes, werden verlässlich erkannt. Je früher jedoch in den Schichten eine Auflösungsreduktion erfolgt, und aus Gründen begrenzter Ressourcen ist dies regelmäßig sehr früh, umso mehr besteht die Gefahr, feine Strukturen zu übersehen. Das neuronale Netz neigt daher zu falsch negativen Fehlern, selbst wenn dies kein inhärentes Problem neuronaler Netze ist, sondern der Implementierung auf realer Hardware für Codeleseranwendungen mit früher Auflösungsreduktion geschuldet ist.

Das komplementäre Fehlerverhalten der beiden Segmentierungen wird erfindungsgemäß ausgenutzt, indem die Ergebnisse der einzelnen Segmentierungen gemeinsam bewertet werden, um Codebildbereiche aufzufinden. Ausführungsformen einer solchen intelligenten Fusion sollen nun erläutert werden. Die Fusion erfolgt vorzugsweise auf der Ebene von Ergebniskarten und wird so beschrieben, aber es ist ein entsprechendes Vorgehen in anderer Repräsentation ebenfalls möglich. Dabei sind Ergebniskarten vorzugsweise binarisiert, geben also in ihren Pixeln an, ob an dieser Position ein Codebildbereich beziehungsweise ein Kandidat dafür bestimmt ist oder nicht. Alternativ können sie auch Scoring-Werte für entsprechende Wahrscheinlichkeiten und/oder Klassifikationsinformationen wie Codetypen enthalten.

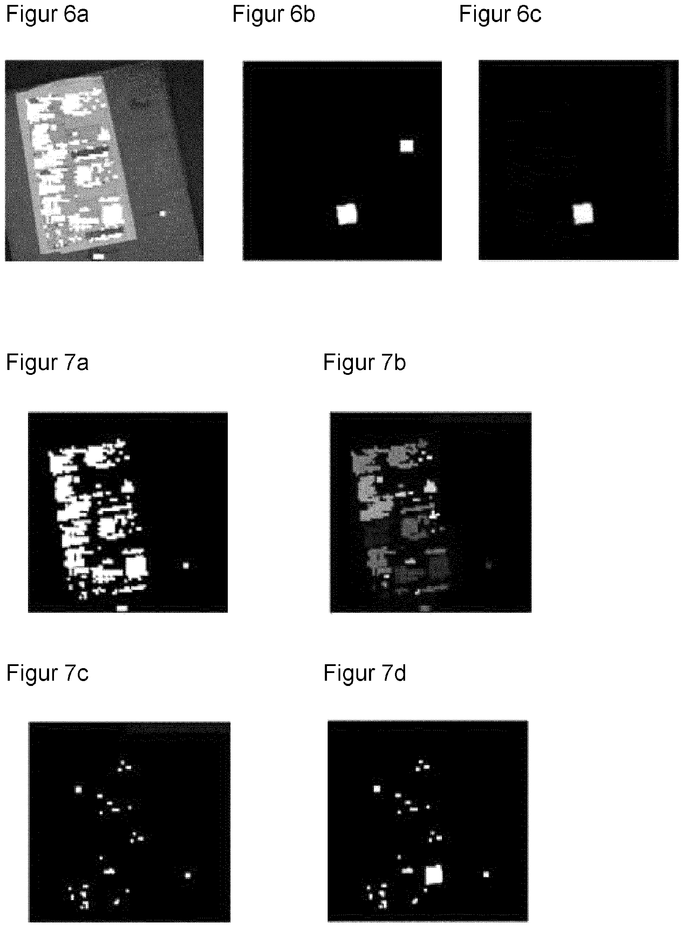

Figur 5 zeigt ein beispielhaftes Ablaufdiagramm für ein Zusammenführen der Ergebnisse eines klassischen Segmentierungsverfahrens und eines Segmentierungsverfahrens mit einem neuronalen Netz zum Auffinden von Codebildbereichen. Der Ablauf wird in den Figuren 6a bis 8d rein beispielhaft an der Verarbeitung des Ausgangsbildes der Figur 2a illustriert.

In einem Schritt S10 werden erste Kandidaten für Codebildbereiche mit einer ersten klassischen Segmentierung bestimmt, wie dies beispielhaft unter Bezugnahme auf die Figur 3 beschrieben wurde. Auf das Ausgangsbild gemäß Figur 2a angewandt, resultiert die in Figur 6a gezeigte erste Ergebniskarte. Hier ist rein zur Veranschaulichung die Bildinformation des Ausgangsbildes noch überlagert, diese Bildinformation ist nicht Teil der ersten Ergebniskarte. Die Figur 6a entspricht der Figur 2b.

In einem Schritt S11 werden zweite Kandidaten für Codebildbereiche mit einer zweiten Segmentierung bestimmt, die Verfahren des maschinellen Lernens einsetzt, insbesondere ein neuronales Netz, wie dies beispielhaft unter Bezugnahme auf die Figur 4 beschrieben wurde. Auf das Ausgangsbild der Figur 2a angewandt, resultiert die in Figur 6b gezeigte zweite Ergebniskarte. Die Figur 6b entspricht der Figur 2c.

In einem nicht gezeigten optionalen Schritt kann eine Normierung der ersten und/oder zweiten Ergebniskarte erforderlich sein. Je nach Größe der Kacheln in der klassischen Segmentierung und Downsampling der Schichten des neuronalen Netzes repräsentieren die Pixel der beiden Ergebniskarten womöglich unterschiedlich große Bildbereiche. Deshalb wird dann eine der Ergebniskarten oder werden beide Ergebniskarten reskaliert, um sie auf eine gleiche Auflösung zu bringen.

In einem Schritt S12 beginnt nun die Fusion der ersten und zweiten Kandidaten, die in den Schritten S10 und S11 aufgefunden wurden, insbesondere der ersten und zweiten Ergebniskarten. Die nachfolgende Kette wird bevorzugt vollständig durchlaufen, allgemein ist aber jeder Schritt als optional anzusehen, das Resultat der Fusion erreicht dann die gewünschten Ziele nur teilweise, was aber immer noch deutlich besser ist als eine Segmentierung, die ausschließlich klassisch oder ausschließlich mit einem Verfahren des maschinellen Lernens arbeitet.

Es können vier Ziele genannt werden, die vorzugsweise gemeinsam erreicht werden, wobei aber bereits die Verwirklichung nur eines Teiles dieser Ziele einen Vorteil aufweist. Das erste Ziel besteht darin, kleine Codebildbereiche, die nur die empfindliche erste klassische Segmentierung findet, nicht zu verlieren. Das zweite Ziel besteht darin, grö-ßere Codebildbereiche, die nur die zweite Segmentierung mit einem Verfahren des maschinellen Lernens exklusiv findet, nicht zu verlieren. Das dritte Ziel besteht in der Vermeidung des Zusammenwachsens mehrere Codebildbereiche. Als viertes Ziel sollen möglichst viele falsch positive Codebildbereiche eliminiert werden.

In einer ersten Annäherung werden im Schritt S12 die ersten Kandidaten und die zweiten Kandidaten der Schritte S10 und S11 mit einem logischen UND verknüpft. Auf Ebene von binären ersten und zweiten Ergebniskarten ist das eine pixelweise logische UND-Verknüpfung, in anderen Repräsentationen ist sinngemäß die doppelte Bedingung zu stellen, dass beide Segmentierungen den jeweiligen Codebildbereich bestätigen.

Figur 6c illustriert das Ergebnis des Schritts S12 in einer dritten Ergebniskarte, die durch UND-Verknüpfung der ersten Ergebniskarte gemäß Figur 6a und der zweiten Ergebniskarte gemäß Figur 6b erzeugt ist. Die erste Ergebniskarte und die zweite Ergebniskarte bleiben vorzugsweise separat gespeichert, damit sie in späteren Schritten noch zur Verfügung stehen. Erkennbar ist in der dritten Ergebniskarte entgegen dem oben formulierten ersten Ziel ein Großteil der ersten Kandidaten aus der ersten Ergebniskarte verlorengegangen. Ferner ist auch entgegen dem zweiten Ziel einer der beiden zweiten Kandidaten aus der zweiten Ergebniskarte verloren gegangen. Dabei handelt es sich beispielsweise um einen schwachkontrastigen, flächengroßen Code, den das Kontrastkriterium der klassischen Segmentierung aussortiert hat. Das dritte und vierte der genannten Ziele wird erreicht.

Optional können nun, sofern die Ergebniskarten nicht rein binär sind und Scoring-Werte enthalten, den in der dritten Ergebniskarte gefundenen Codebildbereichen erhöhte Scoring-Werte zugewiesen werden, weil hier eine Bestätigung durch beide Segmentierungen vorliegt. Diese Scoring-Werte können an später erzeugte Ergebniskarten durchgereicht oder darin weiterverrechnet werden. Der nachgelagerte Decoder kann dies zu einer Priorisierung nutzen, um vorrangig die aussichtsreichsten Codebildbereiche auszuwerten beziehungsweise nicht zu viel Rechenzeit in wenig aussichtsreichen Codebildbereichen zu verlieren.

In Schritten S13 bis S15 sollen zur Verfolgung des ersten Ziels der dritten Ergebniskarte, also der UND-Verknüpfung beider Segmentierungen, nun kleine erste Kandidaten aus der klassischen Segmentierung hinzugefügt werden. Figur 7a zeigt nochmals die erste Ergebniskarte nun in einer bereinigten Darstellung ohne überlagerte Bildinformation des Ausgangsbildes.

Im Schritt S13 werden zunächst beispielsweise mit Hilfe eines Connected Component-Algorithmus' die ersten Kandidaten zu Zusammenhangskomponenten ergänzt, sogenannten Blobs. Ein Blob beschreibt eine zusammenhängende Pixelgruppe, unter der anschaulichen Annahme, dass zusammenhängende Pixel der ersten Ergebniskarte denselben Codebildbereich repräsentieren. Die Blobs zu der ersten Ergebniskarte gemäß Figur 7a sind in Figur 7b gezeigt.

Im Schritt S14 wird ein Größenfilter auf die Blobs angewandt, um speziell nur kleine erste Kandidaten zu behalten. Die Größe kann beispielsweise durch die Fläche, die Anzahl Pixel, eine Kantenlänge, einen Durchmesser oder ein sonstiges Maß bestimmt werden und gegen eine Schwellengröße verglichen werden. Die Motivation hinter diesem Grö-ßenfilter ist, dass größere Codebildbereiche durch die zweite Segmentierung bereits zuverlässig erkannt und daher schon in der dritten Ergebniskarte vorhanden sind. Größere Blobs sollen unberücksichtigt bleiben, um die in dieser Hinsicht als höherwertig angesehene Information der zweiten Ergebniskarte und damit dritten Ergebniskarte nicht zu verfälschen. Die entsprechend gefilterten Blobs oder kleinen ersten Kandidaten bilden eine vierte Ergebniskarte, die in Figur 7c gezeigt ist.

Im Schritt S15 werden die kleinen ersten Kandidaten in das bisherige Ergebnis übertragen, also in die UND-Verknüpfung der (ursprünglichen) ersten Kandidaten und der zweiten Kandidaten. Das kann insbesondere als ODER-Verknüpfung der dritten Ergebniskarte gemäß Figur 6c und der vierten Ergebniskarte gemäß Figur 7c verstanden werden, aus der eine fünfte Ergebniskarte resultiert, die in Figur 7d gezeigt ist. Die fünfte Ergebniskarte kann in der Implementierung eine modifizierte dritte Ergebniskarte sein, die dritte und fünfte Ergebniskarte müssen nicht unbedingt gesondert gespeichert werden, und auch die vierte Ergebniskarte wird nun nicht mehr unbedingt gebraucht. Es ist möglich, den hinzugefügten kleinen Kandidaten einen angepassten Scoring-Wert zu geben, sofern die Ergebniskarten Scoring-Werte enthalten und nicht binär sind. Das erste Ziel ist nun auch erreicht.

In Schritten S16 bis S18 sollen zur Verfolgung des zweiten Ziels zu dem bisherigen Ergebnis exklusiv nur mit der zweiten Segmentierung mit einem Verfahren des maschinellen Lernens bestimmte zweite Kandidaten hinzugefügt werden. Das sind beispielsweise kontrastarme Codes, die von der klassischen Segmentierung übersehen werden. Die Schritte S13 und S15 einerseits und S16 bis S18 andererseits werden bevorzugt kumuliert angewandt, können aber in der Reihenfolge vertauscht oder nur einzeln angewandt werden.

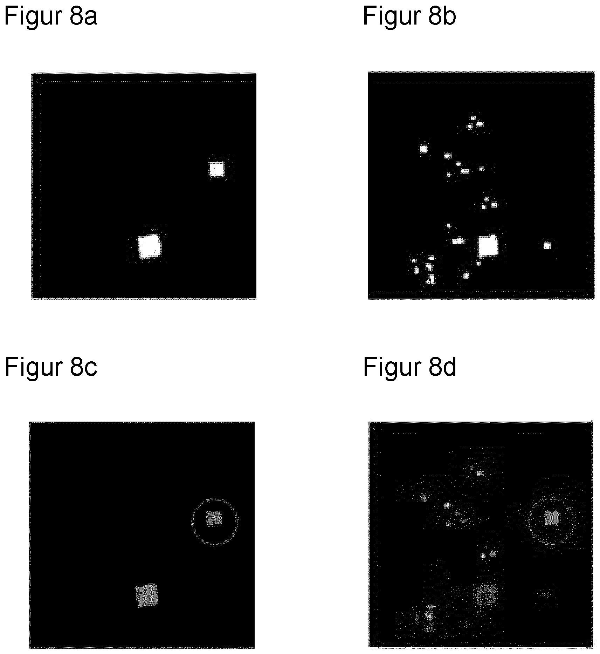

Um die Ausgangssituation der Schritte S16 bis S18 besser zu verstehen, zeigt Figur 8a zum Vergleich nochmals die zweite Ergebniskarte der Figur 6b, und Figur 8b nochmals das bisherige Resultat, nämlich die fünfte Ergebniskarte gemäß Figur 7c.

Im Schritt S16 werden aus den zweiten Kandidaten beispielsweise mittels Connected-Component-Algorithmus' Zusammenhangskomponenten oder Blobs erzeugt. Das ist analog zu Schritt S13, nun aber für die zweiten Kandidaten beziehungsweise die zweite Ergebniskarte. In dem gezeigten Beispiel verändert dieser Schritt wegen der wenigen, klar separierten zweiten Kandidaten die zweite Ergebniskarte nicht sichtbar, und daher werden die Blobs nicht gesondert in einer weiteren Figur gezeigt. Intern gibt es durchaus einen Unterschied, denn es ist nun bekannt, dass es zwei Kandidaten gibt.

Im Schritt S17 wird zu jedem Blob eine Position bestimmt, beispielsweise deren Schwerpunkt. Dann wird für jeden Blob geprüft, ob an dessen Position bereits ein Codebildbereich erkannt war, d.h. das entsprechende Pixel an dieser Position in der fünften Ergebniskarte gemäß Figur 8 b schon gesetzt ist. Zweite Kandidaten an Positionen bereits bekannter Codebildbereiche werden verworfen. Nur zweite Kandidaten an neuen Positionen sind exklusive zweite Kandidaten, d.h. solche, die allein die Segmentierung mit Verfahren des maschinellen Lernens gefunden hat, und nur diese werden beibehalten. Figur 8c illustriert diesen Schritt. Der zweite Kandidat unten war bereits bekannt und wird verworfen, nur der eingekreiste zweite Kandidat rechts oben befindet sich an einer neuen Position und ist ein exklusiver zweiter Kandidat. Es kann eine sechste Ergebniskarte erzeugt werden, die nur exklusive zweite Kandidaten umfasst. Anders als in Figur 8c ist folglich in der sechsten Ergebniskarte der untere, nicht exklusive zweite Kandidat entfernt.

Im Schritt S18 werden die exklusiven zweiten Kandidaten zu den bisher gefundenen Codebildbereichen hinzugefügt. Das kann insbesondere als ODER-Verknüpfung der fünften Ergebniskarte gemäß Figur 8b mit der sechsten Ergebniskarte verstanden werden, wobei die sechste Ergebniskarte nur den eingekreisten exklusiven Kandidaten gemäß Figur 8c umfasst. Es resultiert eine siebte Ergebniskarte oder Gesamtergebniskarte, die in Figur 8d gezeigt ist, wobei natürlich der veranschaulichende Ring um den exklusiven zweiten Kandidaten nicht zur Ergebniskarte gehört.

Die Schritte S16 bis S18 stellen sicher, dass auch das oben genannte zweite Ziel erreicht wird, dass also keine von der zweiten Segmentierung mit Verfahren des maschinellen Lernens aufgefundene Codebildbereiche verloren gehen. Auf den ersten Blick mag es scheinen, dass dafür eine schlichte ODER-Verknüpfung zwischen der zweiten Ergebniskarte gemäß Figur 8a und der fünften Ergebniskarte gemäß Figur 8b ausgereicht hätte. Das würde aber gegen das dritte Ziel verstoßen, es könnten dadurch kleine Codebildbereiche, die von der klassischen Segmentierung korrekt getrennt werden, doch wieder verschmelzen. Das lässt sich gut an sogenannten Stapelcodes verstehen, also mehreren mit nur kleinen Lücken übereinanderliegenden Barcodes. Die erste Segmentierung kann die Barcodes trennen. Die zweite Segmentierung kann dies womöglich schon anfangs im Schritt S11 oder später durch das Anwachsen zu Blobs im Schritt S16 nur als einen gemeinsamen Bereich erkennen. Eine ODER-Verknüpfung würde die Barcodes nun entgegen dem dritten Ziel zu einem einzigen Codebildbereich vereinen. Das Vorgehen gemäß den Schritten S16 bis S18 verhindert dies, weil der zweite Kandidat oder dessen Blob an der Position des Stapelcodes kein exklusiver zweiter Kandidat ist.

Die Gesamtergebniskarte gemäß Figur 8d lässt gut erkennen, dass über den einen Codebildbereich, über den sich die beiden Segmentierungen gemäß der UND-Verknüpfung von Anfang an einig waren, auch die kleinen Codebildbereiche der ersten Segmentierung erhalten bleiben und zugleich großflächige falsch positive Codebildbereiche eliminiert wurden, ohne dabei den schwachkontrastierten exklusiven zweiten Kandidaten der zweiten Segmentierung zu verlieren. Damit sind keine Codes übersehen, die Rate falsch negativer Fehler ist äußerst gering und im Beispiel Null. Die verbleibenden falsch positiven Codebildbereiche sind weniger, und außerdem sind sie klein. Problematisch wären vor allem die eliminierten großen falsch positiven Codebereiche, da solche grö-ßeren Schriftbereiche, Logos, Grafiken, Texturen besonders rechenintensiv sind und der hohe Aufwand am Ende auch noch vergebens sein wird.

Als optionaler weiterer Schritt können Adress- und Textbereiche ausgegeben werden, um sie beispielsweise einer nachgelagerten Texterkennung (OCR, Optical Character Reading) zu übergeben. Die Idee ist hier, dass die zweite Segmentierung mit Verfahren des maschinellen Lernens tatsächlich nur selektiv auf optische Codes und nicht auf Schriften reagiert, was in der Realität gut erreicht wird. Deshalb sind alle ersten Kandidaten potentielle Textbereiche, die nicht zugleich zweite Kandidaten sind. Sofern die erste Segmentierung Barcodes beispielsweise wie in Schritt S3 und S4 anhand einer Vorzugsrichtung erkennt, können solche Regionen auch noch ausgeschlossen werden. In einer Implementierung mit Ergebniskarten kann die als UND-NICHT-Verknüpfung der ersten Ergebniskarte, oder der um Barcodes bereinigten ersten Ergebniskarte, mit der zweiten Ergebniskarte beschrieben werden. Anschließend können noch kleine Flächen beseitigt werden, weil Texte regelmäßig eine gewisse Fläche beanspruchen. Die Textbereiche können in Form einer OCR-Ergebniskarte bearbeitet und ausgegeben werden. Es ist möglich, zu den Textbereichen einen orientierten Rahmen zu berechnen. Anhand bereits erfolgter Decodierungen kann die Ausrichtung womöglich noch korrigiert werden, da Codes und Texte üblicherweise zueinander ausgerichtet, aneinander orientiert und inhaltlich passend sind, beziehungsweise es sind Rückschlüsse aus benachbarten Codes auf einen Textbereich hinsichtlich dessen Größe, Orientierung und auch Inhalt vorstellbar.

Alternativ zu den unter Bezugnahme auf Figur 5 beschriebenen besonders vorteilhaften Ausführungsformen einer Fusion der Ergebnisse beider Segmentierungen sind auch weitere Ausführungsformen vorstellbar. So können die ersten und zweiten Kandidaten nur UND-verknüpft werden, womit gleichsam das Verfahren gemäß Figur 5 beim Schritt S12 abgebrochen wird. Dadurch bleiben nur verlässliche Codebildbereiche übrig, die in geringer Decodierzeit abgearbeitet werden können, allerdings mit der Gefahr, Codes und insbesondere kleine Codes zu übersehen. Beispielsweise in Anwendungen, in denen ohnehin nur große Codes erwartet werden, kann dies durchaus hingenommen werden. Alternativ können die ersten und zweiten Kandidaten nur ODER-verknüpft werden, womit das Verfahren gemäß Figur 5 im Schritt S12 durch die Ersetzung des UND mit ODER modifiziert und dann abgebrochen wird. Das liefert ein Maximum an Codebildbereichen und ist vorteilhaft, wenn genug Decodierzeit zur Verfügung steht und eine besonders hohe Leserate angestrebt ist. Das Ergebnis der zweiten Segmentierung kann in einer weiteren Alternative lediglich als Filter gegen falsch positive Codebildbereiche verwendet werden. Sofern beispielsweise die Feinsegmentierung allein nach erster klassischer Segmentierung zu viele Codebildbereiche erzeugt, werden insbesondere dynamisch Codebildbereiche eliminiert, die von der zweiten Segmentierung nicht bestätigt sind. In einer nochmals weiteren Alternative werden die Ergebnisse beider Segmentierungen neben- oder nacheinander durchgearbeitet, bis zur Feinsegmentierung und Decodierung. Das ist ausgesprochen laufzeitintensiv, garantiert aber die höchste Leserate.

Die genannten Alternativen ermöglichen eine Steuerung bezüglich verfügbarer Decodierzeit und korrespondierend angestrebter Laufzeit. In aufsteigender Abfolge benötigter Decodierzeit und erreichter Leserate können folgende Kombinationen angewandt werden: Eine reine UND-Verknüpfung, Verwendung nur der Codebildbereiche der zweiten Segmentierung, die unter Bezugnahme auf Figur 5 erläuterte Fusion, Verwendung nur der Codebildbereiche der ersten Segmentierung, eventuell dynamisch gefiltert mit der zweiten Segmentierung, Verwendung nur der Codebildbereiche der ersten Segmentierung, eine reine ODER-Verknüpfung, doppelte Auswertung der separaten Ergebnisse der ersten und zweiten Segmentierung.

## Patentansprüche

1. Computerimplementiertes Verfahren zum Auffinden von Codebildbereichen in einem Ausgangsbild eines codetragenden Objekts (14), wobei erste Kandidaten für Codebildbereiche in einem ersten Segmentierungsverfahren mit einem Verfahren der klassischen Bildverarbeitung ohne maschinelles Lernen bestimmt werden,
**dadurch gekennzeichnet,**
**dass** zweite Kandidaten für Codebildbereiche in einem zweiten Segmentierungsverfahren mit maschinellem Lernen bestimmt werden und dass die ersten und zweiten Kandidaten zusammengeführt werden, um die Codebildbereiche aufzufinden.

2. Verfahren nach Anspruch 1,
wobei das erste Segmentierungsverfahren eine erste Ergebniskarte und/oder das zweite Segmentierungsverfahren eine zweite Ergebniskarte erzeugt, wobei eine Ergebniskarte ein Bild geringerer Auflösung als das Ausgangsbild ist, dessen Pixel eine Information aufweisen, ob am Ort des Pixels ein Codebildbereich erkannt ist.

3. Verfahren nach Anspruch 1 oder 2,
wobei im Anschluss an das Auffinden der Kandidaten eine Feinsegmentierung erfolgt, in der die Codebildbereiche feiner abgegrenzt werden.

4. Verfahren nach einem der vorhergehenden Ansprüche,
wobei ein Codebildbereich dort in dem Ausgangsbild als aufgefunden gilt, wo ein erster Kandidat und ein zweiter Kandidat bestimmt sind, oder alternativ dort, wo ein erster oder ein zweiter Kandidat bestimmt ist.

5. Verfahren nach einem der vorhergehenden Ansprüche,
wobei die ersten Kandidaten zu zusammenhängenden Bildbereichen ergänzt werden, und wobei nur kleine erste Kandidaten erhalten bleiben, die kleiner sind als eine Schwellengröße.

6. Verfahren nach einem der vorhergehenden Ansprüche,
wobei die zweiten Kandidaten zu zusammenhängenden Bildbereichen ergänzt werden, und wobei nur exklusive zweite Kandidaten erhalten bleiben, deren Position nicht mit einer Position eines schon aufgefundenen Codebildbereichs übereinstimmt.

7. Verfahren nach einem der vorhergehenden Ansprüche,
wobei zu den ersten Kandidaten, zweiten Kandidaten und/oder Codebildbereichen eine Wertzahl bestimmt wird, die angibt, wie verlässlich an der repräsentierten Position ein optischer Code (20, 22) im Ausgangsbild erkannt ist.

8. Verfahren nach einem der vorhergehenden Ansprüche,
wobei erste Kandidaten für 1D-Codes, erste Kandidaten für 2D-Codes, zweite Kandidaten für 1D-Codes und/oder zweite Kandidaten für 2D-Codes bestimmt werden.

9. Verfahren nach einem der vorhergehenden Ansprüche,
wobei erste Kandidaten, die nicht zugleich zweite Kandidaten sind, als Textbildbereich innerhalb des Ausgangsbilds angesehen werden.

10. Verfahren nach einem der vorhergehenden Ansprüche,
wobei das erste Segmentierungsverfahren erste Kandidaten in einem in Kacheln unterteilten Ausgangsbild bestimmt.

11. Verfahren nach einem der vorhergehenden Ansprüche,
wobei das erste Segmentierungsverfahren eine Kontrastbestimmung aufweist, in der erste Kandidaten einen Mindestkontrast aufweisen müssen.

12. Verfahren nach einem der vorhergehenden Ansprüche,
wobei in dem ersten Segmentierungsverfahren längs zweier Linien quer zueinander Helligkeitskanten gezählt werden, um anhand der jeweiligen Anzahl Helligkeitskanten eine Vorzugsrichtung zu bestimmen, und nur im Falle einer Vorzugsrichtung ein erster Kandidat für einen 1D-Code erkannt ist.

13. Verfahren nach einem der vorhergehenden Ansprüche,
wobei das zweite Segmentierungsverfahren ein neuronales Netz aufweist.

14. Verfahren nach Anspruch 13,
wobei das neuronale Netz mittels überwachten Lernens anhand von Beispielbildern trainiert wird, die anhand der Ergebnisse eines Segmentier- und/oder Decodierverfahrens ohne Verfahren des maschinellen Lernens bewertet sind.

15. Optoelektronischer Codeleser (10) mit mindestens einem Lichtempfangselement (24) zur Erzeugung von Bilddaten aus Empfangslicht und mit einer Steuer- und Auswertungseinheit (26), in der ein Verfahren zum Auffinden von Codebildbereichen in einem Ausgangsbild eines codetragenden Objekts (14) implementiert ist, bei dem erste Kandidaten für Codebildbereiche in einem ersten Segmentierungsverfahren mit einem Verfahren der klassischen Bildverarbeitung ohne maschinelles Lernen bestimmt werden,
**dadurch gekennzeichnet,**
**dass** bei dem in der Steuer- und Auswertungseinheit (26) implementierten Verfahren zweite Kandidaten für Codebildbereiche in einem zweiten Segmentierungsverfahren mit maschinellem Lernen bestimmt werden und die ersten und zweiten Kandidaten zusammengeführt werden, um die Codebildbereiche aufzufinden.

## Claims

1. A computer-implemented method for locating code image regions in an initial image of a code-bearing object (14), wherein first candidates for code image regions are determined in a first segmentation method using a method of classical image processing without machine learning,
**characterized in that** second candidates for code image regions are determined in a second segmentation method using machine learning, and **in that** the first and second candidates are combined to find the code image regions.

2. The method according to claim 1,
wherein the first segmentation method generates a first result map and/or the second segmentation method generates a second result map, wherein a result map is an image of lower resolution than the original image, the pixels of which have information as to whether a code image region is recognized at the location of the pixel.

3. The method according to claim 1 or 2,
wherein a fine segmentation is carried out after the candidates have been located, in which the code image regions are more finely delimited.

4. The method according to any of the preceding claims,
wherein a code image region is considered to be located in the initial image where a first candidate and a second candidate are determined, or alternatively where a first or a second candidate is determined.

5. The method according to any of the preceding claims,
wherein the first candidates are complemented to form contiguous image regions, and wherein only small first candidates smaller than a threshold size are retained.

6. The method according to any of the preceding claims,
wherein the second candidates are complemented to form contiguous image regions, and wherein only exclusive second candidates whose position does not correspond to a position of a code image region already located are retained.

7. The method according to any of the preceding claims,
wherein a value number is determined for the first candidates, second candidates and/or code image regions, which value number indicates how reliably an optical code (20, 22) is recognized in the initial image at the represented position.

8. The method according to any of the preceding claims,
wherein first candidates for 1D codes, first candidates for 2D codes, second candidates for 1D codes and/or second candidates for 2D codes are determined.

9. The method according to any of the preceding claims,
wherein first candidates which are not also second candidates are regarded as text image regions within the initial image.

10. The method according to any of the preceding claims,
wherein the first segmentation method determines first candidates in an initial image divided into tiles.

11. The method according to any of the preceding claims,
wherein the first segmentation method comprises a contrast determination in which first candidates must have a minimum contrast.

12. The method according to any of the preceding claims,
wherein in the first segmentation method, brightness edges are counted along two lines transversely to one another in order to determine a preferred direction on the basis of the respective number of brightness edges, and a first candidate for a 1D code is recognized only in the case of a preferred direction.

13. The method according to any of the preceding claims,
wherein the second segmentation method comprises a neural network.

14. The method according to claim 13,
wherein the neural network is trained by means of supervised learning using example images which are evaluated using the results of a segmentation and/or decoding method without machine learning methods.

15. An optoelectronic code reader (10) having at least one light-receiving element (24) for generating image data from received light and having a control and evaluation unit (26) in which a method for locating code image regions in an initial image of a code-bearing object (14) is implemented, wherein first candidates for code image regions are determined in a first segmentation method using a method of classical image processing without machine learning, **characterized in that**, in the method implemented in the control and evaluation unit (26), second candidates for code image regions are determined in a second segmentation method with machine learning, and the first and second candidates are combined in order to find the code image regions.

## Revendications

1. Procédé mis en oeuvre par ordinateur pour trouver des zones d'image à code dans une image initiale d'un objet porteur de code (14), dans lequel des premiers candidats pour des zones d'image à code sont déterminés dans un premier procédé de segmentation avec un procédé de traitement d'image classique sans apprentissage automatique,
**caractérisé en ce que**
des deuxièmes candidats pour des zones d'image à code sont déterminés dans un deuxième procédé de segmentation avec apprentissage automatique, et **en ce que** les premiers et deuxièmes candidats sont réunis pour trouver les zones d'image à code.

2. Procédé selon la revendication 1,
dans lequel le premier procédé de segmentation génère une première carte de résultats et/ou le deuxième procédé de segmentation génère une deuxième carte de résultats, une carte de résultats étant une image de résolution inférieure à celle de l'image initiale, dont les pixels comprennent une information indiquant si une zone d'image à code est reconnue à l'emplacement du pixel.

3. Procédé selon la revendication 1 ou 2,
dans lequel, une fois que les candidats sont trouvés, une segmentation fine est effectuée, dans laquelle les zones d'image à code sont délimitées plus finement.

4. Procédé selon l'une des revendications précédentes,
dans lequel une zone d'image à code dans l'image initiale est considérée comme trouvée là où un premier candidat et un deuxième candidat sont déterminés ou, en variante, là où un premier ou un deuxième candidat est déterminé.

5. Procédé selon l'une des revendications précédentes,
dans lequel les premiers candidats sont complétés pour former des zones d'image cohérentes, et seuls les petits premiers candidats qui sont plus petits qu'une taille seuil sont conservés.

6. Procédé selon l'une des revendications précédentes,
dans lequel les deuxièmes candidats sont complétés pour former des zones d'image cohérentes, et seuls les deuxièmes candidats exclusifs sont conservés, dont la position ne coïncide pas avec une position d'une zone d'image à code déjà trouvée.

7. Procédé selon l'une des revendications précédentes,
dans lequel une valeur numérique est déterminée pour les premiers candidats, les deuxièmes candidats et/ou les zones d'image à code, ladite valeur numérique indiquant la fiabilité avec quelle un code optique (20, 22) est reconnu dans l'image initiale à la position représentée.

8. Procédé selon l'une des revendications précédentes,
dans lequel des premiers candidats pour des codes 1D, des premiers candidats pour des codes 2D, des deuxièmes candidats pour des codes 1D et/ou des deuxièmes candidats pour des codes 2D sont déterminés.

9. Procédé selon l'une des revendications précédentes,
dans lequel les premiers candidats qui ne sont pas à la fois des deuxièmes candidats sont considérés comme des zone d'image à texte à l'intérieur de l'image initiale.

10. Procédé selon l'une des revendications précédentes,
dans lequel le premier procédé de segmentation détermine des premiers candidats dans une image initiale divisée en carreaux.

11. Procédé selon l'une des revendications précédentes,
dans lequel le premier procédé de segmentation comprend une détermination de contraste dans laquelle les premiers candidats doivent présenter un contraste minimal.

12. Procédé selon l'une des revendications précédentes,
dans lequel, dans le premier procédé de segmentation, des bords de luminosité sont comptés le long de deux lignes transversales l'une à l'autre, afin de déterminer une direction préférentielle à l'aide du nombre respectif de bords de luminosité, et un premier candidat pour un code 1D n'est reconnu que dans le cas d'une direction préférentielle.

13. Procédé selon l'une des revendications précédentes,
dans lequel le deuxième procédé de segmentation comprend un réseau neuronal.

14. Procédé selon la revendication 13,
dans lequel le réseau neuronal est entraîné par apprentissage supervisé à partir d'images échantillons qui sont évaluées à partir des résultats d'un procédé de segmentation et/ou de décodage sans procédé d'apprentissage automatique.

15. Lecteur de code optoélectronique (10) comprenant au moins un élément récepteur de lumière (24) pour générer des données d'image à partir de la lumière reçue et comprenant une unité de commande et d'évaluation (26) dans laquelle est mis en oeuvre un procédé pour trouver des zones d'image à code dans une image initiale d'un objet porteur de code (14), dans lequel des premiers candidats pour des zones d'image à code sont déterminés dans un premier procédé de segmentation avec un procédé de traitement d'image classique sans apprentissage automatique,
**caractérisé en ce que**
dans le procédé mis en oeuvre dans l'unité de commande et d'évaluation (26), des deuxièmes candidats pour des zones d'image à code sont déterminés dans un deuxième procédé de segmentation avec apprentissage automatique, et les premiers et deuxièmes candidats sont réunis pour trouver les zones d'image à code.
